# FASCICULE DE BREVET EUROPEEN

(11) **EP 4 634 613 B1**
(45) Date de publication et mention de la délivrance du brevet: **26.08.2026**
(21) Numéro de dépôt: 23833633.3
(22) Date de dépôt: 13.12.2023
(51) Int. Cl.: G01B 11/25

(54) **DISPOSITIF D'INSPECTION D'ÉLÉMENT FILETÉ ET MÉTHODE D'INSPECTION CORRESPONDANTE**
VORRICHTUNG ZUR INSPEKTION EINES GEWINDEELEMENTS UND ZUGEHÖRIGES INSPEKTIONSVERFAHREN
DEVICE FOR INSPECTING A THREADED ELEMENT AND CORRESPONDING INSPECTION METHOD

(30) Priorité: 14.12.2022 FR 2213290
(43) Date de publication de la demande: 22.10.2025
(73) Titulaire: Vallourec Oil and Gas France, 59620 Aulnoye-Aymeries (FR)
(72) Inventeur: DAVID, Didier, 92190 Meudon (FR); PETIT, Sébastien, 92190 Meudon (FR)
(74) Mandataire: Mbacke, Mactar
(86) Numéro de dépôt international: PCT/EP2023/085710
(87) Numéro de publication internationale: WO 2024/126631

(56) Documents cités:
- CN-A- 110 887 449
- CN-U- 216 246 127
- US-A1- 2011 238 199

## Description

### Domaine technique

La présente invention concerne un dispositif et un procédé de mesure de forme de filetage pour un élément fileté, plus particulièrement pour la mesure de forme de filets des éléments tels qu'un joint fileté pour une conduite de puits de pétrole, de stockage de dioxyde de carbone ou d'hydrogène, ou de puits de géothermie.

La mesure de la forme de filetage détermine un profil de forme de filetage dans la direction axiale de vissage de l'élément fileté, et les éléments de filetage sont mesurés sur la base du profil de forme de filetage. Dans le cas, par exemple, d'un filetage de conduit de puits de pétrole, les éléments de filetage comprennent les éléments suivants :
Une zone filetée, qui est une portion de surface d'un élément fileté axialement délimitée par une première extrémité de filetage d'un côté et de l'autre côté par une deuxième extrémité de ce filetage.

Les éléments filetés sont dotés d'extrémités filetées. Ces extrémités filetées sont complémentaires permettant le raccordement d'un composant tubulaires mâle (« Pin » en anglais) et d'un composant tubulaire femelle (« Box » en anglais) entre eux. Il y a donc une extrémité filetée mâle et une extrémité filetée femelle. Une zone filetée peut comprendre des filets dits parfaits ou des filets dits imparfaits, un filet imparfait ayant une section correspondant à une section incomplète d'un filet parfait correspondant, par exemple sur une hauteur réduite.

Un filetage est un ensemble des filets d'une pièce, mâle ou femelle, engendré par un profil géométrique se déplaçant le long d'une surface suivant un mouvement hélicoïdal.

Un filetage comprend, vu sur une représentation en coupe, une succession de dents ou filets espacés régulièrement les uns des autres. Ainsi, sur une représentation en coupe, on entend par « dent » une portion en créneau s'étendant depuis la base d'un flanc d'engagement jusqu'à la base d'un flanc porteur, ledit flanc d'engagement et ledit flanc porteur étant joints par une crête.

Au sein d'une extrémité filetée, une portion de filetage mâle ou femelle vue en coupe transversale présente un segment de droite reliant des mi-hauteurs de flancs de filets porteurs de filets consécutifs ledit segment formant un angle avec l'axe de l'extrémité filetée. Si cet angle est nul, la portion de filetage est dite cylindrique. Si l'angle est non nul, la portion de filetage est dite conique. L'angle peut être exprimé en degrés, radiants, pourcentage. L'angle de filetage est égal à deux fois l'angle formé entre ledit segment de droite et l'axe de l'extrémité filetée, ou encore l'angle de filetage est égal à l'angle au sommet du cône formé par le segment de droite en génératrice tournant autour de l'axe de l'extrémité filetée.

Un filetage peut être cylindrique, c'est-à-dire avoir une génératrice parallèle à l'axe de l'extrémité filetée, ou un filetage peut être conique, c'est-à-dire avoir une génératrice formant un angle non nul par rapport à l'axe de l'extrémité filetée.

Un filet comprend deux flancs, flanc d'engagement et flanc porteur, un fond de filet et un sommet de filet.

Les flancs d'engagement (ou « *stabbingflank »* en anglais) sont les surfaces de filets aptes à entrer en contact lorsque l'on engage les filetages des composants filetés mâles et femelles l'un dans l'autre. Ils correspondent par conséquent aux flancs dirigés vers l'extrémité libre du composant tubulaire considéré.

Les flancs porteurs (ou « *loading flank »* en anglais) sont les surfaces de filets aptes à entrer en contact lorsqu'un joint fileté est soumis à des efforts axiaux de traction. Ils correspondent par conséquent aux flancs dirigés du côté opposé à l'extrémité libre du composant tubulaire considéré.

Angle(s) positif ou négatif : Par convention, dans le cadre de l'invention, il sera utilisé le sens anti-trigonométrique qui est aussi le sens horaire. Ainsi, un angle positif va dans le sens horaire et inversement un angle négatif va dans le sens antihoraire.

L'usinage d'un tube pour produire son filetage implique l'existence d'un pas de filetage. La notion de pas de filetage doit être comprise à la lumière de la norme ISO 5408 : 2009 qui porte sur la définition des filetages. Le pas de filetage correspond à la distance axiale, sur un tour, entre deux points successifs tels que deux sommets ou deux fonds successifs d'un filetage, ladite distance étant nommé « P ». Le pas de filetage doit être maitrisé afin de permettre un vissage entre le filetage mâle et le filetage femelle correspondant pour l'assemblage et l'utilisation d'un joint.

### Arrière-plan technologique

On connaît des techniques conventionnelles de mesure de la forme du filetage d'éléments filetés, reposant par exemple sur un éclairage tangentiel du filetage et la captation d'image par un capteur optique faisant face à la source de lumière de façon à générer une image bidimensionnelle. Il existe des variantes sur l'orientation de l'émission de lumière, l'utilisation de miroirs, mais ces méthodes présentent l'inconvénient de manquer de précision et de n'être adaptées qu'à un nombre limité de types de connexions. En effet, dès qu'un flanc de filet présente un angle négatif, il est impossible de projeter son profil complet, rendant la mesure directe impossible.

CN 216246127 U présente un dispositif de mesure d'un élément fileté comprenant un chassis pourvu de deux capteurs confocaux mobiles par rapport au chassis de façon à permettre la mesure des flancs supérieur et inférieur de l'élément fileté le long de l'axe longitudinal dont la combinaison permet d'obtenir le profil complet du filetage.

De plus, même dans un cas où le filetage est irradié avec une lumière parallèle dans la direction tangentielle de l'hélice du filetage, le trajet lumineux parallèle est linéaire et non hélicoïdal, et par conséquent, le profil de forme de fil capturé par la lumière parallèle est différent du profil réel qui lui est hélicoïdal, avec l'interférence des surfaces adjacentes à une tranche visée.

De plus, le dispositif selon l'invention est transportable.

### Résumé

L'invention repose sur l'utilisation de deux capteurs optiques ayant des directions de captation distinctes, et la possibilité de réunir les données de mesures des deux capteurs pour reconstituer une forme de filetage mesuré, permettant ainsi de réduire les temps de cycle de contrôles, et de digitaliser un profil qui peut alors être validé.

Selon un mode de réalisation, l'invention fournit un dispositif de mesure dimensionnelle d'un élément fileté comprenant un châssis, le châssis comprenant un premier capteur à laser lignes ayant une première direction optique de mesure et un deuxième capteur à laser lignes ayant une deuxième direction optique de mesure, ladite deuxième direction optique de mesure formant an angle non nul avec la première direction optique de mesure dans un plan contenant la première direction optique de mesure, le premier capteur à laser ligne et le deuxième capteur à laser ligne étant montés de manière mobile sur le châssis et ayant au moins une trajectoire de mesure permettant de réaliser des acquisitions de données géométriques de l'élément fileté passant par un gabarit de calibration et pouvant passer par une portion de l'élément fileté, le dispositif comprenant un encodeur arrangé pour déterminer une position du premier capteurs à laser ligne et une position du deuxième capteurs à laser lignes selon un axe principal et une électronique arrangée pour construire un premier profil partiel à partir du premier capteur à laser ligne et un deuxième profil partiel à partir du deuxième capteur à laser ligne, l'électronique étant arrangée pour construire un profil complet à partir du premier profil partiel et du deuxième profil partiel en fonction des positions respectives du premier capteur à laser ligne et du deuxième capteur à laser ligne et en fonction d'au moins une mesure effectuée sur le gabarit de calibration.

Il est ainsi possible de proposer un dispositif permettant de tester et mesurer une extrémité d'un élément fileté avec une grande précision, tout en pouvant réaliser des mesures dans des environnements peu contrôlés, le positionnement de l'élément fileté par rapport au dispositif étant maitrisé mécaniquement et les sources d'erreurs liées au positionnement étant compensées pour chaque opération de mesure par des moyens de calibration intégrés à l'opération.

Selon des modes de réalisation, un tel dispositif peut comporter une ou plusieurs des caractéristiques suivantes.

Selon un mode de réalisation, l'angle est compris entre 30° et 70°, préférentiellement entre 40° et 60°. Ceci permet de mesurer une grande variété de filets de profil type à crochet ou de profil type en queue d'aronde.

Selon un mode de réalisation, le premier capteur à laser ligne et le deuxième capteur à laser ligne sont montés en translation sur le châssis. Ainsi, la trajectoire des capteurs relativement à la pièce à mesurer est simple et il est possible de compenser une erreur de désaxage de positionnement de l'élément fileté par rapport au dispositif.

Selon un mode de réalisation, le gabarit de calibration comprend des surfaces délimitant des longueurs prédéterminées de référence. Ceci permet de fournir des repères dimensionnels pour le processus de calibration lors d'une opération de mesure.

Selon un mode de réalisation, le gabarit de calibration comprend une face d'appui arrangée pour contacter une face d'extrémité de l'élément fileté à mesurer. Ceci permet de minimiser les erreurs de positionnement de l'élément fileté par rapport au dispositif et de simplifier la procédure de calibration.

Selon un mode de réalisation, le dispositif comprend une cale de positionnement agencée pour pouvoir être en appui sur des sommets de filets de l'élément fileté. Ceci permet de simplifier et de fiabiliser le positionnement du dispositif sur l'élément fileté.

Selon un mode de réalisation, la cale de positionnement comprend une surface d'insertion tronconique présentant un axe de surface d'insertion tronconique et étant apte à être en contact avec les sommets de filets de l'élément fileté. Ceci permet d'adapter la cale de positionnement et le dispositif à des éléments filetés possédant un filetage conique.

Selon un aspect, la face d'appui est perpendiculaire à l'axe de la surface d'insertion tronconique de la cale de positionnement.

Selon un mode de réalisation, le gabarit de calibration comprend une surface de référence de flanc d'engagement, une surface de référence de flanc porteur, une surface de référence de longueur axiale, une surface de référence de longueur radiale. Ceci permet de définir des références de longueurs pour la calibration qui correspondent aux caractéristiques nominales de l'élément fileté à mesurer, et d'améliorer la précision de mesure.

Selon un mode de réalisation, le gabarit de calibration comprend une extension de référence longitudinale définissant une longueur de référence Dr et l'électronique est arrangée pour déterminer un facteur de correction de trajectoire de mesure lié à la trajectoire du premier et du deuxième capteurs à laser lignes. Ceci permet de corriger les valeurs mesurées en fonction d'une erreur de désaxage de positionnement de l'élément fileté par rapport au dispositif.

Selon un mode de réalisation, l'électronique est arrangée pour comparer un profil digital de filet comprenant des cotes minimales et maximales avec le profil complet et l'électronique est configurée pour générer un résultat de conformité du filet. Ceci permet de donner à l'utilisateur un résultat de conformité de l'élément fileté.

Selon un aspect, l'électronique est arrangée pour réaliser des mesures dimensionnelles de surfaces de l'extrémité de l'élément fileté.

L'invention est aussi une méthode de mesure dimensionnelle d'une extrémité d'un élément fileté comprenant les étapes de :
- monter sur l'élément fileté le dispositif de mesure tel que ci-dessus
- effectuer une acquisition de données avec le premier capteur à laser ligne et le deuxième capteur à laser ligne sur le gabarit de mesure
- déterminer des facteurs correctifs de mesure et les stocker dans une mémoire de l'électronique
- effectuer une deuxième acquisition de données sur l'extrémité de l'élément fileté avec le premier capteur à laser ligne et le deuxième capteur à laser ligne
- générer un premier profil partiel à partir d'un premier jeu de données issu de la deuxième acquisition de données par le premier capteur à laser lignes
- générer un deuxième profil partiel à partir d'un deuxième jeu de données issu de la deuxième acquisition de données par le deuxième capteur à laser lignes
- générer un profil complet à partir du premier profil partiel, du deuxième profil partiel et des facteurs correctifs de mesure.

La méthode permet de valider et mesurer un élément fileté quant à ses caractéristiques dimensionnelles avec des opérations simples et avec une très grande précision.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[fig. 1] La figure 1 est une vue en perspective du dispositif en situation de mesure sur un élément fileté.
[fig. 2] La figure 2 est une vue en perspective d'un gabarit de calibration selon l'invention.
[fig. 3]La figure 3 est une vue en perspective d'une cale de positionnement selon l'invention.
[fig. 4]La figure 4 est une vue en coupe schématique d'une variante de réalisation du dispositif de la figure 1 dans le cadre d'un élément fileté de type femelle.

### Description des modes de réalisation

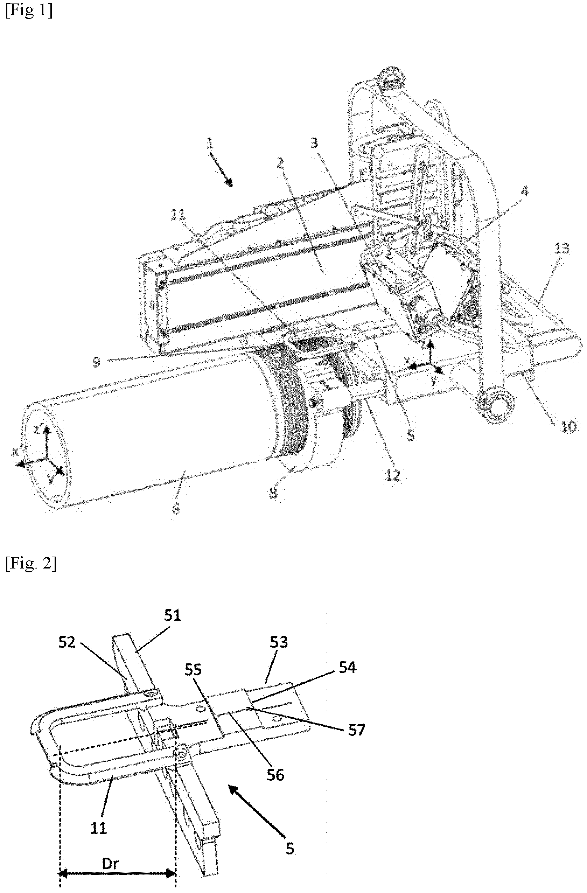

Le dispositif de mesure 1 selon l'invention tel que visible en figure 1 comprend un châssis 2 comprenant une table 10, sensiblement rectangulaire sur laquelle est montée sur un premier côté une poignée 13 qu'un opérateur peut opérer pour pousser la table vers un élément fileté 6 ou bien pour tirer le dispositif de l'élément fileté 6. La table 10 comprend sur un côté opposé au premier côté au moins un vérin 12 relié à une cale de positionnement 8. Sur le mode de réalisation illustré, le dispositif comprend deux vérins 12.

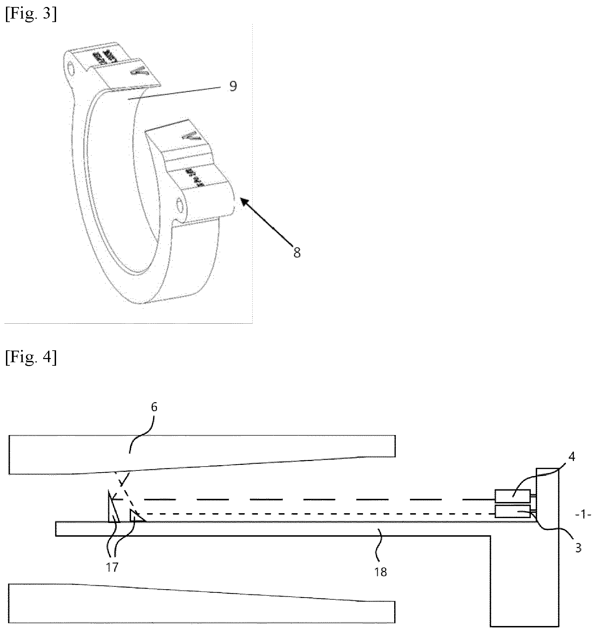

La cale de positionnement 8 isolée en figure 3 comprend une surface d'insertion 9 arrangée pour être en contact avec des sommets de filets d'un élément fileté 6. Dans le mode de réalisation illustré, l'élément fileté comprend un filetage mâle présentant une conicité. En conséquence, la cale de positionnement 8 comprend une surface d'insertion tronconique 9 avec une conicité correspondant sensiblement à la conicité du filetage, la surface d'insertion tronconique 9 étant tournée vers l'intérieur de façon à contacter les sommets des filets mâles de l'élément fileté 6 qui sont tournés vers l'extérieur. Cette surface d'insertion tronconique 9 permet d'aligner le dispositif avec l'axe du filetage. La surface d'insertion tronconique 9 comprend un plus grand diamètre intérieur et un plus petit diamètre intérieur tels que la surface d'insertion tronconique 9 vient se positionner sur des filets parfaits de l'élément fileté 6. En effet, la surface d'insertion tronconique 9 doit reposer sur des filets parfaits de l'élément fileté 6. On comprendra que la cale de positionnement 8 est dimensionnée en fonction du modèle de connexion dont il est souhaité de contrôler le filetage, plus particulièrement de la conicité du filetage du modèle de la connexion. Il existe donc une cale de positionnement adaptée à une connexion conique par exemple de type VAM^{©} TOP 7-5/8, une autre cale de positionnement adaptée à une connexion conique de type VAM^{©} 21 5-3/4, ou encore une connexion cylindrique de type API, etc... Une cale de positionnement est donc interchangeable avec une autre cale sur le dispositif selon l'invention. Une cale de positionnement peut aussi être adaptée à plusieurs types de connexions.

La cale de positionnement 8 est tronquée de manière à laisser apparents les filetages sur une orientation correspondant à une trajectoire de mesure par des capteurs dimensionnels 3,4.

La cale de positionnement 8 permet le placement de l'extrémité de l'élément fileté 6, et d'un gabarit de calibration 5, dans une profondeur de champ des capteurs dimensionnels tel que la profondeur de champs des lasers des capteurs dimensionnels est constante, quel que soit le diamètre de l'élément fileté. Cette profondeur de champ peut varier entre 5 et 200 mm, mais est préférentiellement entre 5 et 50 mm. Ceci permet d'éviter de changer le positionnement des capteurs dimensionnels dans la direction (z) perpendiculaire à la table.

Le dispositif de la figure 1 comprend deux vérins ou axes de coulissement 12 reliant la cale de positionnement 8 à la table 10.

Lorsqu'un opérateur positionne le dispositif selon l'invention sur une extrémité d'un élément fileté 6, la cale de positionnement 8 est amenée autour d'un filetage de l'élément fileté 6, puis l'opérateur pousse le dispositif vers l'élément fileté 6 à l'aide de la poignée 13, qui facilite la préhension par l'opérateur et les gestes de positionnement et mise en place du dispositif. La cale de positionnement 8 est poussée sur le filetage, jusqu'à ce que la surface d'insertion 9, venant s'appuyer sur des sommets de filet du filetage de l'élément fileté 6, s'oppose à tout mouvement axial supplémentaire de la cale de positionnement 8. L'opérateur peut continuer de pousser le dispositif vers l'élément fileté 6 et les vérins ou axes de coulissement 12 de manière que le cône de positionnement se positionne sur les filetages parfaits et jusqu'à ce qu'une face d'appui 52 du gabarit de calibration 5 contacte la face d'extrémité de l'élément fileté 6.

Plus précisément, le contact entre l'extrémité de l'élément fileté 6 et l'extrémité de la table 10 est établi entre l'extrémité de l'élément fileté 6 et un gabarit de calibration 5 monté sur la table 10. Le gabarit de calibration 5 est visible en détail sur la figure 2. Le gabarit de calibration 5 est une pièce spécifiquement usinée avec grande précision dont certaines dimensions sont parfaitement connues et renseignées dans une mémoire d'une électronique du dispositif 1. Le gabarit de calibration 5 comprend une portion transversale 51 assurant le positionnement et la fixation du gabarit de calibration 5 sur la table 10 d'une part, et, d'autre part, dont une surface frontale plane ou face d'appui 52 est destinée à venir en contact avec une extrémité d'élément fileté 6. Le gabarit de calibration 5 comprend une portion longitudinale 53 présentant des longueurs de référence dont les dimensions sont parfaitement connues. Les longueurs de référence sont délimitées par des surfaces. Ces longueurs sont donc prédéterminées et servent de références pour le dispositif, et sont renseignées dans une mémoire d'une électronique de traitement du dispositif. Ces surfaces de référence sont agencées pour permettre au dispositif de corriger les données relevées par les capteurs dimensionnels 3, 4 qui sont dépendantes des positionnements et orientations desdits capteurs dimensionnels 3, 4 relativement à l'élément fileté 6 et au gabarit de calibration 5. Les corrections sont déterminées à partir de mesures réalisées par les capteurs dimensionnels 3,4 sur le gabarit de calibration 5 et la comparaison des mesures réalisées aux valeurs des longueurs prédéterminées de référence. Des facteurs de correction peuvent être calculés à partir de cette comparaison. Ainsi, à partir de premières mesures effectuées sur le gabarit de calibration 5, l'acquisition de données est corrigée pour les mesures effectuées sur le filetage de l'élément fileté 6 avec les facteurs de correction ainsi calculés.

Le gabarit de calibration 5 est positionné sur la trajectoire de mesure des capteurs dimensionnels 3, 4 de manière à permettre une calibration à chaque opération de mesure sur un élément fileté 6.

Le gabarit de calibration 5 comprend une face d'appui 52 sur sa portion transversale 51 arrangée pour venir en contact avec une face d'extrémité de l'élément fileté 6. La face d'appui 52 est perpendiculaire à l'axe de la surface d'insertion tronconique 9 de la cale de positionnement 8. En combinaison avec l'action de la cale de positionnement 8 sur le filetage, l'appui de la face d'appui 52 sur la face d'extrémité de l'élément fileté 6 permet de verrouiller le dispositif sur l'élément fileté 6 pour effectuer une mesure, et de définir un repère dimensionnel orthogonal.

En particulier, le gabarit de calibration 5 comprend une surface de référence de flanc d'engagement 54, une surface de référence de flanc porteur 55, une surface de référence de longueur axiale 56, une surface de référence de longueur radiale 57. Ainsi la surface de référence de flanc d'engagement 54 présente une orientation sensiblement identique à l'orientation d'une surface de flanc d'engagement d'un filet de l'élément fileté 6 à mesurer, de manière analogue, la surface de référence de flanc porteur 55 présente une orientation sensiblement identique à l'orientation d'une surface de flanc porteur d'un filet de l'élément fileté 6. Ceci permet d'améliorer la précision de mesure sur les flancs de filets. La surface de référence de longueur axiale 56 est délimitée par deux surfaces décrochant de la surface de référence de longueur axiale. La longueur de la surface de référence de longueur axiale 56 correspond à une distance axiale de référence, et permet d'améliorer la précision de mesure des sommets et fonds de filets. La surface de référence de longueur radiale est matérialisée par des évidements perpendiculaires à la surface de référence de longueur axiale 56.

La portion longitudinale 53 est située dans le prolongement de la portion tronquée de la cale de positionnement 8. Autrement dit, la portion longitudinale 53 est sur la trajectoire de mesure des capteurs dimensionnels 3,4.

Le dispositif comprend également une extension de référence longitudinale 11 sur le gabarit de calibration 5. Cette extension de référence longitudinale 11 est de dimension connue, de façon à définir une distance de référence Dr, délimitée d'une part par une surface de l'extension de référence longitudinale 11, par exemple la surface faisant face à la portion transversale 51, et une surface de la portion transversale 51. Ceci permet d'identifier au travers des mesures effectuées une déviation de la trajectoire des capteurs dimensionnels 3,4 par rapport à une trajectoire théorique parallèle à l'axe de l'élément fileté.

La cale de positionnement 8 et le gabarit de calibration 5 permettent de positionner de manière répétable le dispositif sur l'élément fileté 6 et aussi de manière à faire coïncider le plus possible l'axe principal de l'élément fileté 6 avec un axe de mesure du dispositif selon l'invention, c'est-à-dire avec une déviation minimale de l'axe de mesure par rapport à l'axe principal de l'élément fileté 6.

Dans le mode de réalisation de la figure 1, les deux capteurs dimensionnels 3, 4 sont identiques et sont des capteurs à laser lignes ou profileurs lasers. Un prototype a été construit en utilisant des capteurs GOCATOR 2510 de la société LMI Technologies. Les deux capteurs dimensionnels 3, 4 sont montés sur un support agencé pour permettre un réglage de position et d'orientation sur les trois axes. Aussi, les capteurs dimensionnels 3, 4 sont montés en translation de façon à se mouvoir selon une direction correspondant sensiblement à la direction principale ou axe principal (x), afin que les faisceaux respectifs des deux profileurs lasers puissent parcourir l'ensemble des zones d'intérêt de l'extrémité de l'élément fileté, à savoir le filetage ou les filetages, les éventuelles surfaces fonctionnelles et les autres parties de l'extrémité filetée, voire l'intégralité de l'extrémité de l'élément fileté. Le déplacement selon l'axe de translation des capteurs dimensionnels 3, 4 est mesuré par un codeur linéaire.

Les capteurs à laser ligne émettent un faisceau laser centré sur une direction de visée, de sorte que la projection du faisceau laser forme une ligne sur une surface à mesurer. La mesure du laser est synchronisée avec la mesure d'un codeur optique déterminant une position longitudinale selon l'axe principal (x). Ceci permet de reconstruire un profil complet à partir de deux profils partiels tracés digitalisés par les capteurs à laser ligne. Les distances des points de la ligne projetée sont évaluées par un dispositif interne de captation d'image de type caméras, le faisceau laser étant émis de manière pulsée et le temps de vol des rayons lumineux étant mesurés de manière à déterminer une distance au capteur dimensionnel. La direction de visée est sensiblement perpendiculaire à la face de l'émetteur laser.

On définit un repère orthogonal attaché au dispositif de mesure et appelé repère de mesure (O, x, y, z) l'axe principal (x) est sensiblement aligné sur un axe principal x' du filetage de l'élément fileté 6 à mesurer. Cet alignement est obtenu physiquement par la mise en place de la cale de positionnement 8 sur l'élément fileté. L'axe secondaire (y) est dans un plan parallèle à une surface supérieure du gabarit de calibration 5 et l'axe tertiaire (z) est perpendiculaire à une surface supérieure du gabarit de calibration 5.

Les directions de visée respectives de chacun des capteurs ou directions optiques de mesure respectives, forment, dans un plan contenant l'axe principal et l'axe tertiaire (O, x, z), un angle A entre la première direction de visée et la deuxième direction de visée qui est compris entre 30° et 70°. Préférentiellement, l'angle A est compris entre 40° et 60°. Avec un tel angle entre les deux directions, il est possible de mesurer les données géométriques des flancs de filets, que ces flancs soient à angle négatif ou à angle positif. En particulier, il est possible d'effectuer des mesures sur des filets de profil type à crochet ou de profil type en queue d'aronde. Il est aussi possible d'effectuer des mesures sur des filetages à pas variables, par ailleurs souvent associés à des profils type en queue d'aronde.

Les directions de visée respectives de chacun des capteurs dimensionnels sont en opposition l'une par rapport à l'autre, c'est-à-dire que la direction de visée du premier capteur est opposée à la direction de visée du deuxième capteur en projection sur l'axe principal (x).

Les directions de visée respectives peuvent former un angle de désaxage B non nul dans un plan contenant l'axe principal (x) et l'axe secondaire (y). Cet angle est le plus proche de zéro possible, mais il est naturellement imparfait dans la réalité. Pour améliorer la précision de mesure, cet angle de désaxage est compensé par une étape de calibration dans le processus de mesure qui implique de réaliser une étape de mesure sur le gabarit de calibration.

Par ailleurs, le déplacement des capteurs dimensionnels 3, 4 ne se fait pas rigoureusement parallèlement à l'axe principal x' de l'élément fileté à mesurer, mais selon une direction pouvant présenter un premier angle de déviation α par rapport au premier axe (x) dans le plan (O, x, y), un deuxième angle de déviation β par rapport au premier axe (x) dans e plan (O, x, z), et un troisième angle de déviation γ par rapport au troisième axe (z) dans le plan (O, y, z), la première étape de mesures sur le gabarit de calibration 5 permet de déterminer des facteurs de correction fonction du premier angle de déviation α, du deuxième angle de déviation β et du troisième angle de déviation γ.

L'étape suivante comprend l'acquisition d'un premier jeu de mesures par le premier capteur dimensionnel 3 et d'un deuxième jeu de mesures par le deuxième capteur dimensionnel 4. Le jeu de mesure concerne le filetage de l'élément fileté, mais peut concerner d'autres surfaces fonctionnelles de l'élément fileté, telles qu'une surface de butée, une surfacé d'étanchéité. Ces surfaces doivent en effet respecter des critères dimensionnels très précis car elles ont des fonctionnalités critiques d'assurer un couple d'assemblage et une étanchéité aux liquides et/ou aux gaz en coopération avec une surface correspondante d'un élément fileté correspondant.

Lorsqu'une mesure est effectuée par le dispositif de mesure dimensionnelle 1 sur un élément fileté, l'électronique est arrangée pour recevoir les mesures du premier capteur dimensionnel 3 et d'un encodeur linéaire dont la sortie est représentative du positionnement du premier capteur dimensionnel 3, l'électronique est arrangée pour reconstruire un premier profil partiel de l'élément fileté investigué.de façon analogue, l'électronique est arrangée pour recevoir les mesures du deuxième capteur dimensionnel 4 et de l'encodeur linéaire dont la sortie est représentative du positionnement du deuxième capteur dimensionnel 4, l'électronique est arrangée pour reconstruire un deuxième profil partiel de l'élément fileté investigué.

Lors de la mesure sur l'élément fileté, les premier et deuxième capteurs dimensionnels 3, 4 effectuent des mesures sur l'élément fileté et également sur le gabarit de calibration 5. L'électronique est arrangée pour relever les mesures effectuées sur le gabarit de calibration 5 et déterminer à partir des mesures effectuées des valeurs mesurées sur les surfaces délimitant les longueurs de référence, dont aux valeurs de référence surface de référence de flanc d'engagement 54, une surface de référence de flanc porteur 55, une surface de référence de longueur axiale 56, une surface de référence de longueur radiale 57, et de déterminer des facteurs de correction par comparaison entre les mesures effectuées sur ces surfaces et les valeurs des longueurs réelles des surfaces de référence.

Lors de la mesure sur l'élément fileté, les premier et deuxième capteurs dimensionnels 3, 4 effectuent des mesures également sur l'extension de référence longitudinale 11, et détermine une valeur de longueur de référence mesurée Dr'. Par comparaison de valeur de longueur de référence mesurée Dr' avec la longueur de référence Dr, l'électronique est arrangée pour déterminer un facteur de correction de trajectoire de mesure lié à la trajectoire du premier et du deuxième capteurs dimensionnels 3,4. Ce facteur permet de compenser un écart entre l'axe principal de l'élément fileté et l'axe de déplacement des capteurs dimensionnels 3, 4.

Le déplacement des capteurs dimensionnels 3, 4 peut se faire à vitesse variable, par exemple à une première vitesse de déplacement plus petite pour faire une acquisition plus dense de points de mesure, et à une deuxième vitesse de déplacement plus grande que la première vitesse de déplacement là où il n'est pas nécessaire d'avoir beaucoup de points de mesures de la surface. Il est intéressant d'avoir une vitesse plus lente et donc plus de points de mesures sur des surfaces fonctionnelles telles que surface de butée ou d'étanchéité, ou sur des surfaces qui sont très inclinées par rapport à l'axe principal (x).

L'électronique est arrangée pour construire un profil complet de l'élément fileté par la réunion du premier profil partiel et du deuxième profil partiel après traitement des données mesurées prenant en compte les facteurs de correction.

L'électronique est arrangée pour superposer le profil complet avec un profil digitalisé comprenant deux tracés de profil, un profil maximal et un profil minimal délimitant une enveloppe de profil. L'électronique est arrangée pour afficher un résultat conforme à l'utilisateur lorsque le profil complet est situé entièrement à l'intérieur de l'enveloppe, ou d'afficher un résultat non conforme si le profil complet n'est pas entièrement à l'intérieur de l'enveloppe.

L'électronique est arrangée pour permettre la comparaison du profil complet avec des formes géométriques de référence.

Le premier profil partiel peut comprendre des points de mesure sur les sommets de filet, fond de filet et l'un des flancs, par exemple les flancs d'engagement, du fait de l'orientation du premier capteur à laser lignes par rapport au filetage, tandis que le deuxième profil partiel peut comprendre des points de mesure sur les sommets de filet, fond de filet, et l'autre flanc, et par rapport à l'exemple donné, des flancs porteurs. Ainsi, le premier profil partiel et le deuxième profil partiel peuvent avoir des points de mesure sur des parties communes des surfaces mesurées, et des points de mesure sur des parties distinctes des surfaces mesurées, du fait des orientations distinctes et opposées des deux capteurs à laser lignes. La réunion du premier profil partiel et du deuxième profil partiel fera donc apparaître des ensembles de points complémentaires et des ensembles de points se superposant. Le profil complet en tant que réunion des deux profils partiels corrigés après traitement des données comprend des points de mesure sur toutes les surfaces investiguées.

Ainsi, le dispositif selon l'invention permet de mettre en œuvre une méthode de mesure dimensionnelle d'une extrémité d'une élément fileté 6, qui comprend les étapes successives suivantes.

Dans un premier temps, le dispositif 1 est amené sur l'élément fileté 6 et y est monté, de manière que la cale de positionnement 8 soit mise en place sur le filetage, plus précisément sur des sommets de filets du filetage de l'élément fileté 6, et plus précisément sur des sommets de filets parfaits. Cette mise en place se fait par introduction axiale de la cale de positionnement 8 autour de l'extrémité de l'élément fileté 6 et jusqu'à ce que la cale de positionnement 8 s'oppose à tout déplacement supplémentaire, puis le châssis est poussé par un opérateur à l'aide de la pognée 13 vers l'extrémité de l'élément fileté, de manière que les vérins 12 se compriment et jusqu'à ce que la face de butée 52 du gabarit de calibration 5 contacte une face d'extrémité de l'élément fileté 6. Ainsi le dispositif de mesure 1 est positionné de manière à minimiser des décalages entre l'axe de l'élément fileté 6 et un axe principal x d'un repère attaché au dispositif de mesure.

Dans un deuxième temps, une phase d'acquisitions de données est lancée, pendant laquelle les capteurs dimensionnels 3,4 vont parcourir une trajectoire rectiligne passant par le gabarit de mesure et les surfaces à mesurer de l'élément fileté 6, comprenant au moins un filetage, et optionnellement une surface de butée, et optionnellement encore une surface d'étanchéité.

Une étape d'acquisition de données est réalisée sur le gabarit de mesure 5. Ensuite, une étape de détermination de facteurs correctifs de mesure est réalisée par comparaison entre les valeurs prédéterminées correspondant aux valeurs réelles des dimensions de certaines surfaces du gabarit de calibration 5 avec les valeurs mesurées sur lesdites surfaces par les capteurs dimensionnels 3,4.

Une étape d'acquisition de données est réalisée sur le ou les surfaces à mesurer de l'élément fileté, comprenant au moins un filetage, et optionnellement une surface de butée, et optionnellement encore une surface d'étanchéité, de manière à obtenir un premier profil partiel issu des mesures effectuées par le premier capteur dimensionnel 3 et du codeur linéaire et à obtenir un deuxième profil partiel issu des mesures effectuées par le deuxième capteur dimensionnel 4.

Les profils partiels sont ensuite réunis, après corrections appliquées avec les facteurs correctifs de mesure, en un profil complet ou profil complet.

Le profil complet peut ensuite être soumis à une opération de filtrage ou lissage.

Le profil complet obtenu est ensuite comparé à un profil digital représentant une enveloppe de cotes minimales et maximales du profil de filetage, et un résultat de conformité du filetage est obtenu, positif si le profil complet est entièrement contenu à l'intérieur de l'enveloppe définie par le profil digitalisé, ou négatif dans le cas contraire.

Enfin, des mesures dimensionnelles peuvent être réalisées sur le profil complet, telles que, de manière non limitative : détermination de rayons de courbure (par inscription de cercles), mesure linéaire directe entre points du profil.

La figure 4 illustre schématiquement une variante de réalisation du dispositif de la figure 1 dans le cadre d'un élément fileté de type femelle, c'est-à-dire présentant un filetage sur une surface interne de l'élément fileté. Sur cette figure 4, les éléments identiques ou remplissant la même fonction que ceux décrits ci-dessus en regard des figures 1 à 3 portent la même référence.

Dans le cadre d'un élément fileté 6 de type femelle de grande dimension (non illustré), le dispositif de mesure 1 est analogue au dispositif de mesure 1 décrit ci-dessus avec une orientation des capteurs dimensionnels 3, 4 adaptée pour émettre un faisceau laser en direction du filetage de l'élément fileté 6, et optionnellement d'une surface de butée, et optionnellement encore d'une surface d'étanchéité. On entend par élément fileté 6 de grande dimension un élément fileté permettant l'insertion des capteurs dimensionnels 3, 4 dans ledit élément fileté 6 avec une distance minimale entre les capteurs dimensionnels 3, 4 et la ou les surfaces à inspecter de l'élément fileté 6. Typiquement, la distance entre les capteur dimensionnels 3, 4 et la ou les surfaces à inspecter doit être supérieure au début de plage de mesure desdits capteur dimensionnels 3, 4.

Cependant, si le diamètre interne de l'élément fileté 6 ne permet pas l'insertion des capteurs dimensionnels 3, 4 avec une distance entre lesdits capteurs dimensionnels 3, 4 et la ou les surfaces à inspecter supérieure à la distance de début de plage de mesure desdits capteurs dimensionnels 3, 4, le dispositif de mesure 1 comporte des miroirs 17 (voir figure 4) pour orienter les faisceaux laser émis par les capteurs dimensionnels 3, 4 en direction de la ou des surfaces à inspecter sur l'élément fileté 6. Les capteurs dimensionnels 3, 4 sont alors montés sur le châssis 2 pour émettre leur faisceau laser en direction des miroirs 17, lesdits miroirs 17 étant montés mobiles et orientables sur le dispositif de mesure 1 pour rediriger les faisceaux laser.

Le dispositif de mesure 1 comporte un moyen de déplacement et de guidage des miroirs 17, dans le mode de réalisation illustré sur la figure 4 un rail de guidage 18. Ce moyen de déplacement et de guidage est inséré dans l'élément fileté 6 lors du positionnement du dispositif de mesure 1 sur l'élément fileté 6, typiquement, et, de façon analogue au positionnement du dispositif de mesure décrit ci-dessus en regard des figures 1 à 3, lorsque la surface d'insertion tronconique de la cale de positionnement et la face d'appui sont en appui respectivement contre le sommet des filets parfaits et la face d'extrémité de l'élément fileté 6.

Les miroirs 17 sont montés sur le rail de guidage 18 de manière à pouvoir se déplacer le long dudit rail de guidage 18, par exemple au moyen d'un moteur ad hoc. La position des miroirs 17 est en outre contrôlée de manière analogue au contrôle de position des capteurs dimensionnels 3, 4 des figures 1 à 3, par exemple au moyen d'un encodeur linéaire. Les capteurs dimensionnels 3, 4 sont orientés de manière à émettre un faisceau laser en direction d'un miroir 17 respectif. Ce faisceau laser est alors réfléchi par ledit miroir 17 pour impacter la ou les surfaces à inspecter, par exemple le gabarit, le filetage de l'élément fileté 6, une surface de butée et/ou une surface d'étanchéité.

Avantageusement, les miroirs 17 présentent en outre une orientation configurable, par exemple au moyen d'un support de miroir orientable ou d'une liaison pivot entre le miroir 17 et le rail de guidage 18. Ainsi, les miroirs 17 sont aptes à se déplacer et changer d'orientation le long du rail de guidage 18. Ce changement d'orientation pourrait également être obtenu par un remplacement du miroir 17 sur le rail de guidage 18 par un miroir présentant l'orientation désirée.

L'orientation des miroirs 17 permet de diriger les faisceaux laser émis par les capteurs dimensionnels selon l'orientation désirée. Autrement dit, le réglage de l'orientation des capteurs dimensionnels 3, 4 dans le mode de réalisation illustré sur la figure 1 est ici remplacé par le réglage de l'orientation des miroirs 17, cette orientation des miroirs 17 définissant les directions optiques de mesure des capteurs dimensionnels. Il est ainsi possible, grâce à l'orientation respective des miroirs 17 et des capteurs dimensionnels 3, 4, de définir des directions optiques de mesures formant un angle entre la première direction de visée et la deuxième direction de visée, par exemple un angle compris entre 30° et 70°, et préférentiellement entre 40° et 60°.

Dans un autre mode de réalisation, l'orientation de miroirs 17 est fixe, par exemple à 45° par rapport à l'axe longitudinal de l'élément fileté 6, mais l'orientation des capteurs dimensionnels 3, 4 peut être modifiée pour impacter les miroirs 17 avec des angles différents, permettant ainsi d'orienter les directions de visée correspondantes. Par ailleurs, les miroirs 17 peuvent prendre différentes formes, par exemple des miroirs 17 plats, à plusieurs faces, incurvés ou autre pour permettre différentes orientation des directions de visée. Il est par exemple possible d'avoir deux miroirs 17, un pour chaque capteur dimensionnel 3, 4, ou au contraire un seul miroir 17 avec une forme particulière permettant d'orienter la direction de visée en fonction de l'orientation du capteur dimensionnel 3 ou 4.

De façon analogue au mode de réalisation illustré sur la figure 1, le gabarit de calibration 5 est positionné sur la trajectoire de mesure des capteurs dimensionnels 3, 4 définie par les miroirs 17 de manière à permettre une calibration à chaque opération de mesure sur un élément fileté 6.

## Revendications

1. Dispositif de mesure dimensionnelle d'un élément fileté (6) comprenant un châssis (2), le châssis (2) comprenant un premier capteur à laser lignes (3) ayant une première direction optique de mesure et un deuxième capteur à laser lignes (4) ayant une deuxième direction optique de mesure, ladite deuxième direction optique de mesure formant an angle A non nul avec la première direction optique de mesure dans un plan contenant la première direction optique de mesure, le premier capteur à laser ligne (3) et le deuxième capteur à laser ligne (4) étant montés de manière mobile sur le châssis (2) et ayant au moins une trajectoire de mesure permettant de réaliser des acquisitions de données géométriques de l'élément fileté (6) passant par un gabarit de calibration (5) apte à être monté sur une table (10) du châssis (2) et pouvant passer par une portion de l'élément fileté (6), le dispositif comprenant un encodeur arrangé pour déterminer une position du premier capteurs à laser ligne (3) et une position du deuxième capteurs à laser lignes (4) selon un axe principal (x) et une électronique arrangée pour construire un premier profil partiel à partir du premier capteur à laser ligne (3) et un deuxième profil partiel à partir du deuxième capteur à laser ligne (4), l'électronique étant arrangée pour construire un profil complet à partir du premier profil partiel et du deuxième profil partiel en fonction des positions respectives du premier capteur à laser ligne (3) et du deuxième capteur à laser ligne (4) et en fonction d'au moins une mesure effectuée sur le gabarit de calibration (5).

2. Dispositif de mesure selon la revendication 1, **caractérisé en ce que** ledit angle A est compris entre 30° et 70°, préférentiellement entre 40° et 60°.

3. Dispositif de mesure selon l'une des revendications 1 à 2, **caractérisé en ce que** le premier capteur à laser ligne (3) et le capteur à laser ligne (4) sont montés en translation sur le châssis (2).

4. Dispositif de mesure selon l'une des revendications 1 à 3 dans lequel le gabarit de calibration (5) comprend des surfaces délimitant des longueurs prédéterminées de référence.

5. Dispositif de mesure selon l'une des revendications 1 à 4, dans lequel le gabarit de calibration (5) comprend une face d'appui (52) arrangée pour contacter une face d'extrémité de l'élément fileté (6) à mesurer.

6. Dispositif de mesure selon l'une des revendications 1 à 5 comprenant une cale de positionnement (8) agencée pour pouvoir être en appui sur des sommets de filets de l'élément fileté (6).

7. Dispositif de mesure selon la revendication précédente dans lequel la cale de positionnement (8) comprend une surface d'insertion tronconique (9) présentant un axe de surface d'insertion tronconique et étant apte à être en contact avec les sommets de filets de l'élément fileté (6).

8. Dispositif de mesure selon la revendication 5 prise en combinaison avec la revendication 6 ou 7 dans lequel ladite face d'appui est perpendiculaire à l'axe de la surface d'insertion tronconique (9) de la cale de positionnement (8).

9. Dispositif de mesure selon l'une des revendications précédentes dans lequel le gabarit de calibration (5) comprend une surface de référence de flanc d'engagement (54), une surface de référence de flanc porteur (55), une surface de référence de longueur axiale (56), une surface de référence de longueur radiale (57).

10. Dispositif de mesure selon l'une des revendications précédentes dans lequel le gabarit de calibration (5) comprend une extension de référence longitudinale (11) définissant une longueur de référence Dr et l'électronique est arrangée pour déterminer un facteur de correction de trajectoire de mesure lié à la trajectoire du premier et du deuxième capteurs à laser lignes (3,4).

11. Dispositif de mesure selon l'une des revendications précédentes dans lequel l'électronique est arrangée pour comparer un profil digital de filet comprenant des cotes minimales et maximales avec le profil complet et l'électronique est configurée pour générer un résultat de conformité du filet.

12. Dispositif de mesure selon l'une des revendications précédentes dans lequel l'électronique est arrangée pour réaliser des mesures dimensionnelles de surfaces de l'extrémité de l'élément fileté (6).

13. Méthode de mesure dimensionnelle d'une extrémité d'un élément fileté (6) comprenant les étapes de :
- monter sur l'élément fileté (6) le dispositif de mesure selon l'une des revendications précédentes
- effectuer une acquisition de données avec le premier capteur à laser ligne (3) et le deuxième capteur à laser ligne (4) sur le gabarit de calibration (5)
- déterminer des facteurs correctifs de mesure à partir des données acquises par les capteurs à laser ligne (3,4) sur le gabarit de calibration (5) et les stocker dans une mémoire de l'électronique
- effectuer une deuxième acquisition de données sur l'extrémité de l'élément fileté (6) avec le premier capteur à laser ligne (3) et le deuxième capteur à laser ligne (4)
- générer un premier profil partiel à partir d'un premier jeu de données issu de la deuxième acquisition de données par le premier capteur à laser lignes (3)
- générer un deuxième profil partiel à partir d'un deuxième jeu de données issu de la deuxième acquisition de données par le deuxième capteur à laser lignes (4)
- générer un profil complet à partir du premier profil partiel, du deuxième profil partiel et des facteurs correctifs de mesure.

## Patentansprüche

1. Vorrichtung zur Dimensionsmessung eines Gewindeelements (6), welche ein Gestell (2) umfasst, wobei das Gestell (2) einen ersten Linienlasersensor (3), der eine erste optische Messrichtung aufweist, und einen zweiten Linienlasersensor (4), der eine zweite optische Messrichtung aufweist, umfasst, wobei die zweite optische Messrichtung einen von null verschiedenen Winkel A mit der ersten optischen Messrichtung in einer die erste optische Messrichtung enthaltenden Ebene bildet, wobei der erste Linienlasersensor (3) und der zweite Linienlasersensor (4) beweglich am Gestell (2) angebracht sind und mindestens eine Messtrajektorie aufweisen, die es ermöglicht, Erfassungen von geometrischen Daten des Gewindeelements (6) durchzuführen, durch eine Kalibrierlehre (5) verläuft, die auf einem Tisch (10) des Gestells (2) angebracht werden kann, und durch einen Abschnitt des Gewindeelements (6) verlaufen kann, wobei die Vorrichtung einen Codierer umfasst, der dazu eingerichtet ist, eine Position des ersten Linienlasersensors (3) und eine Position des zweiten Linienlasersensors (4) entlang einer Hauptachse (x) zu bestimmen, und eine Elektronik, die dazu eingerichtet ist, ein erstes Teilprofil anhand des ersten Linienlasersensors (3) und ein zweites Teilprofil anhand des zweiten Linienlasersensors (4) zu konstruieren, wobei die Elektronik dazu eingerichtet ist, ein vollständiges Profil aus dem ersten Teilprofil und dem zweiten Teilprofil in Abhängigkeit von den jeweiligen Positionen des ersten Linienlasersensors (3) und des zweiten Linienlasersensors (4) und in Abhängigkeit von mindestens einer Messung, die an der Kalibrierlehre (5) durchgeführt wurde, zu konstruieren.

2. Messvorrichtung nach Anspruch 1, **dadurch gekennzeichnet, dass** der Winkel A zwischen 30° und 70°, vorzugsweise zwischen 40° und 60° beträgt.

3. Messvorrichtung nach einem der Ansprüche 1 bis 2, **dadurch gekennzeichnet, dass** der erste Linienlasersensor (3) und der Linienlasersensor (4) translatorisch verschiebbar am Gestell (2) angebracht sind.

4. Messvorrichtung nach einem der Ansprüche 1 bis 3, wobei die Kalibrierlehre (5) Flächen umfasst, die vorbestimmte Referenzlängen begrenzen.

5. Messvorrichtung nach einem der Ansprüche 1 bis 4, wobei die Kalibrierlehre (5) eine Anlageseite (52) umfasst, die dazu eingerichtet ist, mit einer Endseite des zu messenden Gewindeelements (6) in Kontakt zu kommen.

6. Messvorrichtung nach einem der Ansprüche 1 bis 5, welche einen Positionierblock (8) umfasst, der dazu eingerichtet ist, an Gewindespitzen des Gewindeelements (6) zur Anlage kommen zu können.

7. Messvorrichtung nach dem vorhergehenden Anspruch, wobei der Positionierblock (8) eine kegelstumpfförmige Einsetzfläche (9) umfasst, die eine Achse der kegelstumpfförmigen Einsetzfläche aufweist und geeignet ist, mit den Gewindespitzen des Gewindeelements (6) in Kontakt zu kommen.

8. Messvorrichtung nach Anspruch 5 in Kombination mit Anspruch 6 oder 7, wobei die Anlageseite senkrecht zur Achse der kegelstumpfförmigen Einsetzfläche (9) des Positionierblocks (8) ist.

9. Messvorrichtung nach einem der vorhergehenden Ansprüche, wobei die Kalibrierlehre (5) eine Eingreifflanken-Referenzfläche (54), eine Tragflanken-Referenzfläche (55), eine Referenzfläche der axialen Länge (56) und eine Referenzfläche der radialen Länge (57) umfasst.

10. Messvorrichtung nach einem der vorhergehenden Ansprüche, wobei die Kalibrierlehre (5) eine Referenz-Längsverlängerung (11) umfasst, die eine Referenzlänge Dr definiert, und die Elektronik dazu eingerichtet ist, einen Messtrajektorien-Korrekturfaktor zu bestimmen, der sich auf die Trajektorie des ersten und des zweiten Linienlasersensors (3, 4) bezieht.

11. Messvorrichtung nach einem der vorhergehenden Ansprüche, wobei die Elektronik dazu eingerichtet ist, ein digitales Gewindeprofil, das minimale und maximale Maßzahlen umfasst, mit dem vollständigen Profil zu vergleichen, und die Elektronik dafür ausgelegt ist, ein Konformitätsergebnis des Gewindes zu erzeugen.

12. Messvorrichtung nach einem der vorhergehenden Ansprüche, wobei die Elektronik dazu eingerichtet ist, Dimensionsmessungen von Flächen des Endes des Gewindeelements (6) durchzuführen.

13. Verfahren zur Dimensionsmessung eines Endes eines Gewindeelements (6), welches die folgenden Schritte umfasst:
- Anbringen der Messvorrichtung nach einem der vorhergehenden Ansprüche an dem Gewindeelement (6),
- Durchführen einer Datenerfassung mit dem ersten Linienlasersensor (3) und dem zweiten Linienlasersensor (4) an der Kalibrierlehre (5),
- Bestimmen der Messkorrekturfaktoren aus den Daten, die von den Linienlasersensoren (3, 4) an der Kalibrierlehre (5) erfasst wurden, und Speichern derselben in einem Speicher der Elektronik,
- Durchführen einer zweiten Datenerfassung am Ende des Gewindeelements (6) mit dem ersten Linienlasersensor (3) und dem zweiten Linienlasersensor (4),
- Erzeugen eines ersten Teilprofils aus einem ersten Datensatz, der von der zweiten Datenerfassung durch den ersten Linienlasersensor (3) stammt,
- Erzeugen eines zweiten Teilprofils aus einem zweiten Datensatz, der von der zweiten Datenerfassung durch den zweiten Linienlasersensor (4) stammt,
- Erzeugen eines vollständigen Profils aus dem ersten Teilprofil, dem zweiten Teilprofil und den Messkorrekturfaktoren.

## Claims

1. Dimensional measurement device for a threaded element (6) comprising a chassis (2), the chassis (2) comprising a first laser line sensor (3) having a first optical measurement direction and a second laser line sensor (4) having a second optical measurement direction, said second optical measurement direction forming a non-zero angle A with the first optical measurement direction in a plane containing the first optical measurement direction, the first laser line sensor (3) and the second laser line sensor (4) being movably mounted on the chassis (2) and having at least one measurement path that is used to acquire geometric data relating to the threaded element (6), that passes over a calibration gauge (5) designed to be mounted on a table (10) of the chassis (2), and that is able to pass over a portion of the threaded element (6), the device comprising an encoder arranged to determine a position of the first laser line sensor (3) and a position of the second laser line sensor (4) along a main axis (x) and electronics arranged to construct a first partial profile from the first laser line sensor (3) and a second partial profile from the second laser line sensor (4), the electronics being arranged to construct a complete profile from the first partial profile and the second partial profile as a function of the respective positions of the first laser line sensor (3) and of the second laser line sensor (4) and as a function of at least one measurement performed on the calibration gauge (5).

2. Measurement device according to Claim 1, **characterized in that** said angle A is between 30° and 70°, preferably between 40° and 60°.

3. Measurement device according to one of Claims 1 to 2, **characterized in that** the first laser line sensor (3) and the laser line sensor (4) are mounted movably in translation on the chassis (2).

4. Measurement device according to one of Claims 1 to 3, wherein the calibration gauge (5) comprises surfaces delimiting predetermined reference lengths.

5. Measurement device according to one of Claims 1 to 4, wherein the calibration gauge (5) comprises a bearing face (52) arranged to come into contact with an end face of the threaded element (6) to be measured.

6. Measurement device according to one of Claims 1 to 5, comprising a positioning element (8) arranged so as to be able to bear against thread crests of the threaded element (6).

7. Measurement device according to the preceding claim, wherein the positioning element (8) comprises a frustoconical insertion surface (9) that has an axis of the frustoconical insertion surface and is able to be in contact with the thread crests of the threaded element (6).

8. Measurement device according to Claim 5 taken in combination with Claim 6 or 7, wherein said bearing face is perpendicular to the axis of the frustoconical insertion surface (9) of the positioning element (8).

9. Measurement device according to one of the preceding claims, wherein the calibration gauge (5) comprises a leading flank reference surface (54), a load flank reference surface (55), an axial length reference surface (56), and a radial length reference surface (57).

10. Measurement device according to one of the preceding claims, wherein the calibration gauge (5) comprises a longitudinal reference extension (11) defining a reference length Dr and the electronics are arranged to determine a measurement path correction factor linked to the path of the first and second laser line sensors (3, 4) .

11. Measurement device according to one of the preceding claims, wherein the electronics are arranged to compare a digital thread profile comprising minimum and maximum dimensions with the complete profile and the electronics are configured to generate a compliance result for the thread.

12. Measurement device according to one of the preceding claims, wherein the electronics are arranged to take dimensional measurements of the surfaces of the end of the threaded element (6).

13. Method for measuring the dimensions of an end of a threaded element (6), comprising the steps of:
- mounting the measurement device according to one of the preceding claims on the threaded element (6)
- acquiring data with the first laser line sensor (3) and the second laser line sensor (4) on the calibration gauge (5)
- determining measurement correction factors from the data acquired by the laser line sensors (3, 4) on the calibration gauge (5) and storing them in a memory in the electronics
- performing a second data acquisition on the end of the threaded element (6) with the first laser line sensor (3) and the second laser line sensor (4)
- generating a first partial profile from a first data set resulting from the second data acquisition by the first laser line sensor (3)
- generating a second partial profile from a second data set resulting from the second data acquisition by the second laser line sensor (4)
- generating a complete profile from the first partial profile, the second partial profile and the measurement correction factors.
